Europäisches Patentamt

European Patent Office

Office européen des brevets

(11) Publication number: **0 461 962 B1**

# EUROPEAN PATENT SPECIFICATION

(45) Date of publication of patent specification: **23.11.94**  (51) Int. Cl.5: **A01N 31/08**

(21) Application number: **91401483.2**

(22) Date of filing: **06.06.91**

The file contains technical information submitted after the application was filed and not included in this specification

(54) **Acaricidal composition.**

(30) Priority: **15.06.90 JP 158497/90**

(43) Date of publication of application:
**18.12.91 Bulletin 91/51**

(45) Publication of the grant of the patent:
**23.11.94 Bulletin 94/47**

(84) Designated Contracting States:
**BE DE FR GB IT NL**

(56) References cited:
**FR-A- 2 417 257
US-A- 4 911 907**

**CHEMICAL ABSTRACTS, vol. 98, no. 23, 6th June 1983, page 222, abstract no.193274x, Columbus, Ohio, US; M.Y. SHABLII: "Study of the effect of variousacaricides on the cells of Varroa jacobsoni", & BYULL. VSES. INST. EKSP.VET. 1981, 41, 70-1**

**CHEMICAL ABSTRACTS, vol. 110, no. 11, 13th March 1989, page 277, abstract no.90624y, Columbus, Ohio, US; & JP-A-63 96 101 (TAISHO PHARMACEUTICAL CO., LTD) 27-04-1988**

(73) Proprietor: **SUMITOMO CHEMICAL COMPANY, LIMITED**
**5-33, Kitahama 4-chome**
**Chuo-ku**
**Osaka (JP)**

(72) Inventor: **Teshima, Hayato**
**4-9-17, Sakuragaoka**
**Minoo-shi, Osaka 562 (JP)**

(74) Representative: **Bourgognon, Jean-Marie et al**
**Cabinet Flechner**
**22, Avenue de Friedland**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to acaricidal compositions for controlling house dust mites.

Recently, with our living environment becoming comfortable owing to change in the style of buildings and spread of air conditioning systems, house dust mites pullulate and not only they give unpleasant feeling, but also they sting and besides cause bronchial asthma and allergy. Thus, house dust mites give rise to serious problems.

Hitherto, as acaricidal compositions for controlling house dust mites, organic phosphorous acaricides such as fenitrothion, fenthion, dichlorvos and diazinon, carbamate acaricides such as propoxur and carbaryl, and pyrethroid acaricides such as d-resmethrin and permethrin have been directly sprayed onto tatami mats or carpets in the form of aerosol, emulsion or oil solution, or impregnated into carpets or smoked, or used as antibug sheet.

FR-A-2 417 257 discloses phenols, such as 3-methyl-6 isopropylphenol with acaricidal activity.

However, these conventional acaricides are not satisfactory in toxicity, smell and controlling spectrum.

Under the circumstances, the inventors have conducted intensive research in an attempt to develop acaricidal compositions low in toxicity and exhibiting superior effect against various mites, As a result, it has been surprisingly found that 3-methyl-4-isopropylphenol can be used as an active ingredient of acaricidal compositions which meet the above objects and have remarkable controlling effect. The present invention has been accomplished after additional investigation thereon.

That is, the present invention relates to an acaricidal composition which contains 3-methyl-4-isopropyl-phenol (hereinafter referred to as "MIP") as an active ingredient.

MIP is prepared by converting m-cresol to an isopropyl derivative and has been used as fungicides for cosmetics or the like.

Mites which can be controlled by the acaricidal compositions of the present invention include, for example, Dermatophagoides spp. such as Dermatophagoides farinae and Dermatophagoides pteronyssinus; Acaridae such as Tyrophagus putrescentiae and Aleuroglyphus ovatus; Glycyphagus spp. such as Glycyphagus privatus, Glycyphagus domesticus, and Glycyphagus destructor; Cheyletidae such as Cheyletus malaccensis and Cheyletus fortis; Tarsonemidae; Haplochthonius simplex; Macronyssidae such as Ornithonyssus bacoti; and mites which are parasitic on animals such as Ornithonyssus sylviarum and Dermanyssus gallinae.

Normally, MIP is mixed with auxiliaries for preparation such as solid carriers, liquid carriers, gaseous carriers, surface active agents and film-forming agents and used in the formulations of emulsifiable concentrate, dust, granule, oil solution, aerosol, sheet and coating agents. These preparations contain 0.1 - 20 % by weight of MIP as an active ingredient.

Carriers used for formulations include, for example, kaolin clay, bentonite, talc and diatomaceous earth as solid carriers; aliphatic hydrocarbons such as kerosine and lamp oil, halogenated hydrocarbons such as dichloroethane, trichloroethane and carbon tetrachloride, and alcohols such as methanol, ethanol, isopropanol, ethylene glycol and 2-ethoxyethanol as liquid carriers; and gaseous carriers such as Freon ® gas (fluorinated hydrocarbon), LPG (liquefied petroleum gas) and dimethyl ether. Surface active agents include, for example, anionic surface active agents such as alkylsulfates and alkyl(aryl)sulfonates and nonionic surface active agents such as polyoxyethylene alkyl ethers and polyoxyethylene-sorbitan fatty acid esters. Furthermore, film-forming agents include, for example, cellulose derivatives, vinyl resins, polyester resins and urethane resins.

It is possible to give polyfunctionality to the acaricidal composition of the present invention or enhance the effect thereof by adding thereto insecticides, acaricides, synergists, pest repellents, bactericides, fungicides, perfumes and colorants, for example, pyrethroid compounds such as permethrin and d-phenothrin.

Examples of usable insecticides, acaricides, bactericides and fungicides are shown in the following Table 1.

Dosage of the acaricidal composition containing MIP as an active ingredient is preferably such that the active ingredient is present in an amount of at least 100 mg per 1 $m^2$, preferably 100 mg to 10 g per 1 $m^2$, of area in which mites should be controlled.

Table 1

| Mark for compound | General name | Chemical name |
|---|---|---|
| (A) | Cypermethrin | α-cyano-3-phenoxybenzyl dl-cis,trans-3-(2,2-dichloro-vinyl)-2,2-dimethylcyclo-propanecarboxylate |
| (B) | Cyphenothrin | (RS)-α-cyano-3-phenoxybenzyl (1R)-cis,trans-chrysanthemate |
| (C) | Fenpropathrin | α-cyano-3-phenoxybenzyl 2,2,3,3-tetramethylcyclopropane-carboxylate |
| (D) | Permethrin | 3-phenoxybenzyl dl-cis,trans-3-(2,2-dichlorovinyl)-2,2-dimethylcyclopropanecarboxyl-ate |
| (E) | d-Phenothrin | 3-phenoxybenzyl (1R)-cis,trans-chrysanthemate |
| (F) | d-Resmethrin | 5-benzyl-3-furylmethyl (1R)-cis,trans-chrysanthemate |
| (G) | Cyfluthrin | α-cyano-4-fluoro-3-phenoxy-benzyl 3-(2,2-dichlorovinyl)-2,2-dimethylcyclopropane-carboxylate |
| (H) | Empenthrin | (RS)-1-ethynyl-2-methyl-2-pentenyl (1R)-cis,trans-chrysanthemate |

EP 0 461 962 B1

Table 1 (continued)

| Mark for compound | General name | Chemical name |
|---|---|---|
| (I) | Prallethrin | (S)-2-methyl-4-oxo-3-(2-propynyl)cyclopent-2-enyl (1R)-cis,trans-chrysanthemate |
| (J) | Ethofenprox | 2-(4-ethoxyphenyl)-2-methyl-propyl m-phenoxybenzyl ether |
| (K) | S-421 | octachlorodipropyl ether |
| (L) | IBTA | isobornyl thiocyanoacetate |
| (M) | Sanplas | 3-bromo-2,3-diiodo-2-propenyl ethyl carbonate |
| (N) | TBZ | 2-(4-thiazolyl)benzimidazole |

When MIP is used in combination with pyrethroid compounds such as permethrin and d-phenothrin, weight the ratio of MIP and pyrethroid compound is normally about 1:1 - about 30:1.

In this case, dosage of MIP and the pyrethroid compound is 100 mg to 10 g and 100 mg to 1 g per 1 $m^2$ respectively.

The present invention will be explained in more detail by the following formulation examples and test examples. The present invention is not limited thereto.

In the following formulation examples and test examples, part is by weight and comparative compounds are shown by the marks of compounds in Table 1.

Formulation Example 1

An oil solution is prepared by mixing 0.2 part of MIP, 2 parts of kerosine and 97.8 parts of illuminating kerosine.

Formulation Example 2

An emulsifiable concentrate is prepared by mixing 10 parts of MIP, 14 parts of polyoxyethylene styrylphenyl ether, 6 parts of calcium dodecylbenzene-sulfonate and 70 parts of kerosine.

Formulation Example 3

A dust formulation is prepared by mixing 1 part of MIP, 89 parts of kaolin clay and 10 parts of talc.

Formulation Example 4

A granule formulation is prepared by well grinding and mixing 5 parts of MIP, 1 part of synthetic hydrated silicon oxide, 2 parts of calcium lignin sulfonate, 30 parts of bentonite and 62 parts of kaolin clay, well kneading the mixture with addition of water, and then granulating and drying the kneaded product.

4

Formulation Example 5

One part of MIP, 0.3 part of compound (D) or (E), 7 parts of kerosine and 31.7 parts of deodorized coal oil are mixed and dissolved and filled in an aerosol container. After fitting a valve to the container, 60 parts of a pressure carrier (liquefied petroleum gas) is pressure filled through the valve portion to obtain an aerosol.

Formulation Example 6

Prior to making a carpet composed of piles made of polypropylene, a first base fabric (nonwoven fabric), a packing agent comprising ethylene vinyl alcohol and a second base fabric made of jute, the piles are kneaded with MIP in an amount of 5.0 g/m$^2$. Thus, a carpet inhibited from breeding of house dust mites is obtained.

Formulation Example 7

A mixture of MIP and compound (D) or (E) is diluted with acetone and the diluted mixture is dropped on and impregnated in a nonwoven fabric at 5.0 g/m$^2$ of MIP or at 0.5 g/m$^2$ of compound (D) or (E) and then this is dried to obtain a sheet inhibited from breeding of house dust mites.

Test Example 1

The emulsifiable concentrate obtained in Formulation Example 2 was diluted to a given concentration and uniformly coated on a filter paper (5 cm x 10 cm). After subjected to air-drying, the filter paper was folded in half and both edges were pasted. Twenty testing mites (Tyrophagus putrescentiae and Dermatophagoides fariane) were introduced from the upper opening and the opening was sealed by a metallic clip. This was kept at room temperature for 24 hours. After lapse of 24 hours, state of the mites was observed and mortality of the mites was obtained. Effects against Tyrophagus putrescentiae and Dermatophagoides farinae are shown in Table 2.

Test Example 2

Aerosol obtained in Formulation Example 5 or in accordance with Formulation Example 5 was uniformly sprayed onto a filter paper (30 cm x 30 cm) for 3 seconds and dried. Then, this filter paper was cut to 5 cm x 10 cm. This was foled in half and both edges thereof were pasted. Twenty testing mites (Tyrophagus putrescentiae and Dermatophagoides farinae) were introduced from upper opening and the opening was sealed by a metallic clip and this was kept at room temperature for 24 hours. After 24 hours, state of the mites was observed and mortality was obtained. Effects against Tyrophagus putrescentiae and Dermatophagoides farinae are shown in Table 3.

Test Example 3

A sheet inhibited from breeding of mites which was obtained in Formulation Example 7 or in accordance with Formulation Example 7 was cut to 5 cm x 5 cm and thereon was put 0.5 g of a medium adjusted to a given density (about 200 mites/g for Tyrophagus putrescentiae and about 500 mites/g for Dermatophagoides farinae). This was kept at room temperature for 2 weeks. After 2 weeks, the number of surviving mites in the medium was counted by saturated aqueous sodium chloride solution floatation method. This was compared with the number of surviving mites in control section and inhibition rate of reproduction was assessed. Effects against Tyrophagus putrescentiae and Dermatophagoides farinae are shown in Table 4.

Table 2

| Dosage (g/m$^2$) | Mortality (%) | |
|---|---|---|
| | Tyrophagus putrescentiae | Dermatophagoides farinae |
| 1.0 | 75 | 90 |
| 5.0 | 100 | 100 |
| 10.0 | 100 | 100 |
| Untreated | 0 | 0 |

Table 3

| Compound | Concentration (W/W%) | Mortality (%) | |
|---|---|---|---|
| | | Tyrophagus putrescentiae | Dermatophagoides farinae |
| MIP | 1 | 75 | 83 |
| MIP/(D) | 1/0.3 | 100 | 100 |
| MIP/(E) | 1/0.3 | 100 | 100 |
| (D) | 0.3 | 38 | 40 |
| (E) | 0.3 | 40 | 45 |
| Untreated | − | 0 | 0 |

Table 4

| Compound | Dosage (g/m$^2$) | Inhibition rate of reproduction (%) | |
|---|---|---|---|
| | | Tyrophagus putrescentiae | Dermatophagoides farinae |
| MIP | 5.0 | 85 | 92 |
| MIP/(D) | 5.0/0.5 | 100 | 100 |
| MIP/(E) | 5.0/0.5 | 100 | 100 |

As shown in the above examples, 3-methyl-4-isopropylphenol of the present invention exhibits excellent mite-controlling effect. Therefore, it can be spread, sprayed or coated onto tatami mat, carpet, sofa, and beddings such as mattress, bedclothes and pillow or spread, sprayed or placed in closets and warehouses.

**Claims**

1. An acaricidal composition for controlling house dust mites which comprises an acaricidally effective amount of 3-methyl-4-isopropylphenol as an active ingredient and an inert carrier or diluent.

2. A method for controlling house dust mites, which comprises applying an acaricidally effective amount of 3-methyl-4-isopropylphenol and an inert carrier or diluent to a locus where house dust mites inhabit.

3. Use of 3-methyl-4-isopropylphenol as an acaricide for controlling house dust mites.

4. An acaricidal composition for controlling house dust mites which comprises an acaricidally effective amount of 3-methyl-4-isopropylphenol and a pyrethroid compound as an active ingredient, and an inert carrier or diluent.

5. The acaricidal composition according to Claim 4, wherein the pyrethroid compound is permethrin.

6. The acaridical composition according to Claim 4, wherein the pyrethroid compound is d-phenothrin.

**Patentansprüche**

1. Akarizide Zusammensetzung zur Bekämpfung von Hausstaubmilben, welche eine akarizid wirksame Menge von 3-Methyl-4-isopropylphenol als Wirkstoff und einen inerten Träger oder Verdünnungsmittel umfaßt.

2. Verfahren zur Bekämpfung von Hausstaubmilben umfassend die Anwendung einer akariziden Menge von 3-Methyl-4-isopropylphenol und eines inerten Trägers oder Verdünnungsmittels an einem Ort, an welchem Hausstaubmilben vorkommen.

3. Verwendung von 3-Methyl-4-isopropylphenol als Akarizid zur Bekämpfung von Hausstaubmilben.

4. Akarizide Zusammensetzung zur Bekämpfung von Hausstaubmilben umfassend eine akarizid wirksame Menge von 3-Methyl-4-isopropylphenol und eine Pyrethroid-Verbindung als Wirkstoff und einen inerten Träger oder Verdünnungsmittel.

5. Akarizide Zusammensetzung nach Anspruch 4, worin die Pyrethroid-Verbindung Permethrin ist.

6. Akarizide Zusammensetzung nach Anspruch 4, worin die Pyrethroid-Verbindung d-Phenothrin ist.

**Revendications**

1. Composition acaricide pour lutter contre les acariens de poussière de maison, qui comprend une quantité acaricidiquement efficace de 3-méthyl-4-isopropylphénol comme ingrédient actif et un support ou diluant inerte.

2. Procédé pour lutter contre les acariens de poussière de maison, qui consiste à appliquer une quantité acaricidiquement efficace de 3-méthyl-4-isopropylphénol et un support ou un diluant inerte à un habitat d'acariens de poussière de maison.

3. L'utilisation du 3-méthyl-4-isopropylphénol comme acaricide pour lutter contre les acariens de poussière de maison.

4. Composition acaricide destinée à lutter contre les acariens de poussière de maison, qui comprend une quantité acaricidiquement efficace de 3-méthyl-4-isopropylphénol et un pyréthroïde comme ingrédient actif et un support ou un diluant inerte.

5. Composition acaricide suivant la revendication 4, dans laquelle le pyréthroïde est le permethrin.

6. Composition acaricide suivant la revendication 4, dans laquelle le pyréthroïde est le d-phénothrin.